Europäisches Patentamt

European Patent Office

Office européen des brevets

(11) Publication number : **0 510 793 A1**

(12) **EUROPEAN PATENT APPLICATION**

(21) Application number : 92301618.2

(22) Date of filing : 26.02.92

(51) Int. Cl.⁵ : **G11B 23/087**

(30) Priority : 28.02.91 JP 58276/91

(43) Date of publication of application :
28.10.92 Bulletin 92/44

(84) Designated Contracting States :
DE FR GB NL

(71) Applicant : VICTOR COMPANY OF JAPAN,
LIMITED
12, 3-chome, Moriya-Cho Kanagawa-ku
Yokohama-Shi Kanagawa-Ken 221 (JP)

(72) Inventor : Takeshi, Eino
Sun Stage Ryokuentoshi 1-408 4-2-1 Ryokuen,
Izumi-ku, Yokohama-shi, Kanagawa-ken (JP)
Inventor : Hiroyuki, Umeda
5-14-7, Nishioonuma, Sagamihara-shi,
Kanagawa-ken, (JP)

(74) Representative : Gladwin, Philip
P. Gladwin & Co 4 Priory Road
High Wycombe, Bucks. HP13 6SE (GB)

(54) Reel brake system for magnetic tape cassette.

(57) A reel brake system for a tape cassette having an upper half (10) and a lower half (1b) forming a case in which a reel hub (4) having an engage socket (4c) for engaging with a reel disc (7) of apparatus, is provided.

The reel brake system comprises restricting members (1c) on the upper half provided off center of the reel rotation, serration (4d) on top of the reel hub, lock device (2) provided between the upper half and the reel hub, which is movable vertically within the case but is restricted from rotation by the restricting members and has a gear portion (6) for engaging with the serration and a center post projecting through a hole (4b) provided on top of the engage socket.

The lock device (2) is biased toward the reel hub (4) to cause engagement of the gear portion (6) with the serration (4d) when the tape cassette is not loaded into the apparatus so that the reel hub is locked in the case, the lock device is pushed upward by the reel disc (7) at the center post (5) to release the engagement upon loading the tape cassette into the apparatus. In detail, the serration (4d) is provided in a recess (4a) of the reel hub, and the lock device (2) further comprises a lock member (6) with radially extending arms having the gear portion and slots for engaging with the restricting members, and a spring (8) for biasing the lock member toward the reel hub.

Fig.2

## BACKGROUND OF THE INVENTION

Field of the Invention:

The present invention relates to improvements of magnetic tape cassettes used in magnetic recording and/or reproducing apparatuses and it particularly relates to improvements of a reel brake system for the tape cassettes .

Description of the Related Art:

Presently, a demand for reducing a size of tape cassette, requires a design of reel brake system extremely thin enough to be built into the magnetic tape cassette (referred to as a "tape cassette" or a "cassette" hereafter).

For instance, a reel brake system used in an R-DAT(rotary head digital audio tape) type cassette comprising a lock plate which slides back and forth coordinated with a rotational motion of a front lid, a lock member formed on the upper side of a reel hub and a pawl formed on the lock plate, which pawl engages or disengages the lock member with the slide motion of the lock plate, is disclosed in the japanese Laid-open Patent Application No.101074/84.

Further, there disclosed in the japanese Laid-open Patent Application No.63779/85, another R-DAT type tape cassette provided with a slider at the bottom surface of the cassette, which closes reel holes and a mouth (opening) for accepting a device for pulling the tape out of the cassette unless the cassette is loaded into the apparatus in order to prevent abuse or contamination of the tape housed in the cassette.

The lock system(reel brake) disclosed in the above mentioned prior art tape cassette as shown in japanese Patent Application Laid-open No. 101074/84, is structured so as to make the pawl of the lock plate engaging the lock member formed on the upper side of a reel hub so that it requires a rather wide space between the cassette ceiling and the top of the reel hub, which is a great disadvantage for reducing the overall size of the tape cassette.

## SUMMARY OF THE INVENTION

Accordingly, a general object of the present invention is to provide a novel and useful tape cassette in which the above disadvantage has been eliminated.

A more specific object of the present invention is to provide a reel brake system for the tape cassette which is thin enough to be built into the magnetic tape cassette.

Another and more specific object of the present invention is to provide a reel brake system for a tape cassette having an upper half and a lower half forming a case in which a reel hub having an engage socket for engaging with a reel disc of apparatus, is provided.

The reel brake system comprises restricting device on the upper half provided off center of the reel rotation, serration on top of the reel hub, lock device provided between the upper half and the reel hub, which is movable vertically within the case but is restricted from rotation by the restricting device and has a gear portion for engaging with the serration and a center post projecting through a hole provided on top of the engage socket.

The lock device is biased toward the reel hub to cause engagement of the gear portion with the serration when the tape cassette is not loaded into the apparatus so that the reel hub is locked in the case, the lock device is pushed upward by the reel disc at the center post to release the engagement upon loading the tape cassette into the apparatus. In detail, the serration is provided in a recess of the reel hub, and the lock device further comprises a lock member with radially extending arms having the gear portion and slots for engaging with the restricting device, and a biasing device for biasing the lock member toward the reel hub.

Other objects and further features of the present invention will be apparent from the following detailed description when read in conjunction with the accompanying drawings.

## BRIEF DESCRIPTION OF THE DRAWINGS

Preferred embodiments of the present invention will be described with reference to the accompanying drawings wherein:

Fig. 1 is a bottom plan view showing an embodiment of a tape cassette of the present invention.

Fig. 2 is an enlarged plan view of a reel hub area of the tape cassette shown in Fig. 1 of which an upper half of the tape cassette is removed.

Fig. 3A and Fig. 3B are cross-sectional views respectively showing a reel hub within a cassette case, along the line III-III in Fig. 2.

Fig. 4A and Fig. 4B are a plan view and a cross-sectional view along the line 4B-4B in Fig. 2 respectively showing a lock member shown in Fig. 1 and Fig. 3.

Fig. 5A is a plan view showing a spring shown in Fig. 2 and Fig. 3.

Fig. 5B is a cross-sectional view of the spring along the line 5B-5B in Fig. 5A.

## DETAILED DESCRIPTION OF THE PREFERRED EMBODIMENT

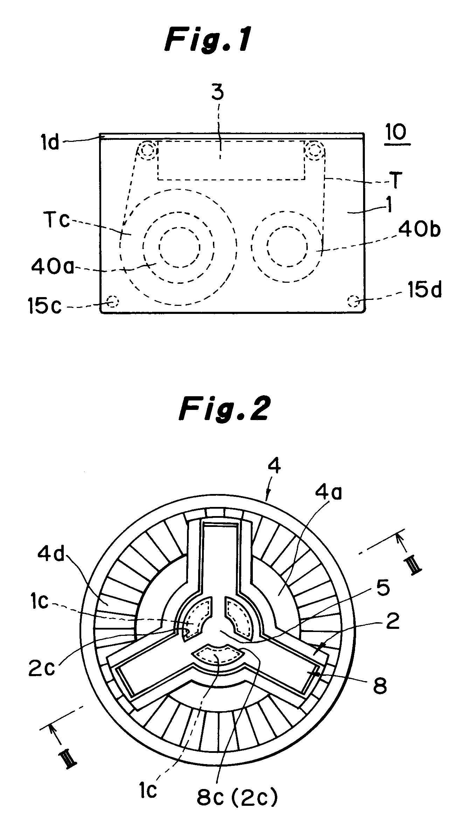

A tape cassette 10 according to the present invention has a configuration shown in Fig. 1.

The tape cassette 10 comprises a cassette case 1 consisting of an upper half 1a and a lower half 1b, a front lid 1d provided at the front side of the upper half 1b to cover the front surface of the cassette case 1, a mouth(opening) 3 formed at the lower half 1b behind the front lid 1d for permitting an insertion of loading poles, a supply reel hub 40a and a take-up reel hub 40b for accommodating magnetic tape rolls T1, T2 respectively, positioning holes 15c, 15d formed at the bottom of the lower half 1b, a magnetic tape T connecting the magnetic tape rolls T1, T2.

Next, description will be given for a case where the above tape cassette is loaded into a recording or reproducing apparatus(not shown).

When the tape cassette 10 is inserted into a slot of the apparatus, the tape cassette 10 is automatically transferred to a predetermined position by a cassette transfer mechanism and is precisely settled at the set position with positioning holes 15c, 15d being guided by positioning pins provided in the apparatus, while the front lid 1d is rotated upwards to open by a lid opening mechanism. As seen in Fig. 1, the tape T is positioned just behind the front lid 1d which is at its closed position. Thus, upon the tape loading, a pair of loading poles enters into the mouth 3 to intercept and engage with the magnetic tape T to draw it out of the cassette 10, subsequently, the loading poles move respectively to predetermined positions so as to bring the magnetic tape T obliquely around a rotational head drum in a predetermined range. Then, recording or reproducing of signals on or from the magnetic tape T is performed by rotational magnetic heads provided to the rotational head drum.

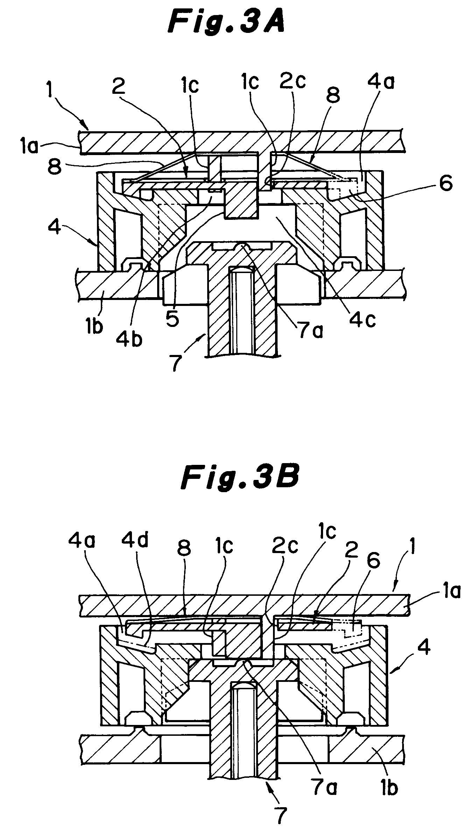

Next, description will be given to the main part of the present invention, referring to Fig. 2 through Fig. 5. Fig. 2 is an enlarged plan view of a reel hub area of the tape cassette shown in Fig. 1 of which an upper half of the tape cassette is removed. A reel hub 4 is used as a supply reel hub 40a and a take-up reel hub 40b in the present invention. Fig. 3A and Fig. 3B are cross-sectional views respectively showing the reel hub 4 within the cassette case 1, along the line III-III in Fig. 2. In these figures, the numeral 2 indicates a lock member movably provided between the upper half 1a and the reel hub 4, 8 a spring for depressing the lock member 2 against the reel hub 4, 7 a reel disc provided in the recording and/or reproducing apparatus, and 1c a guide post which is cylindrical and concentric with a rotation center of the reel hub 4 and is sectored into 3 sections projected from the bottom surface of the upper half 1a for allowing a sliding motion of the lock member 2 along the guide post 1c.

Referring to Fig. 3, the reel hub 4 comprises an engage socket 4c opened at the bottom thereof for engaging with the reel disc 7, a through hole 4b provided in the top portion of the engage socket 4c, and circular serration 4d provided at a bottom of a recess 4a of the reel hub 4 as shown in Fig. 2. On the other hand, the lock member 2 comprises three radially extending arms each having a sector gear portion 6 at the distal end of each arm for engaging with the circular serration 4d, and a center post 5 projecting downward concentrically with the rotation center of the reel hub 4 for snug fitting inside of the guide posts 1c and for contacting the reel disc 7 through the through hole 4b, and first sectorial slots 2c concentrically disposed with the rotation center of the reel hub 4 allowing to engage slidingly with the 3 sections of the guide post 1c, which 3 sections hold and prevent the lock member 2 from rotation.

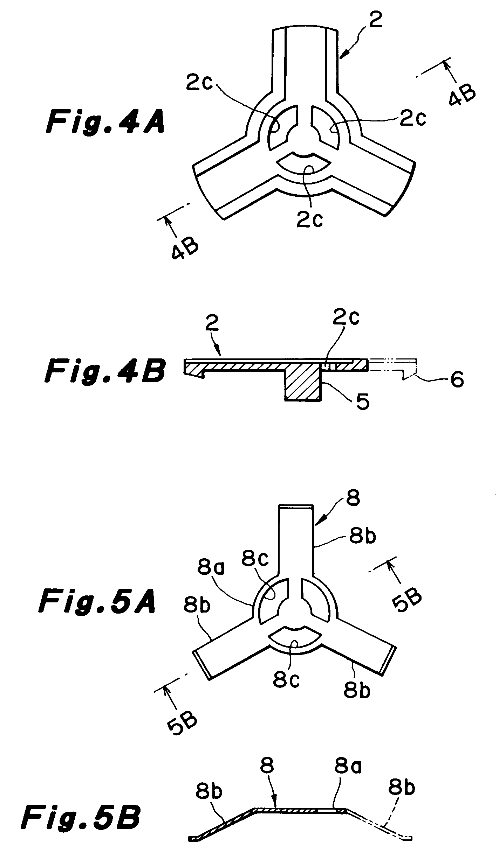

The detailed configuration of the lock member 2 is shown in Fig. 4A and Fig. 5B.

As illustrated in Fig. 5A and Fig. 5B, the spring 8 comprises a ring 8a and three legs 8b slanting downwardly from an outer rim of the ring 8a, and the ring 8a is provided with three second sectorial slots 8c at regular intervals. The second sectorial slots 8c have the same pattern as the first sectorial slots 2c have.

In the present invention, a reel lock mechanism is comprised of the circular serration 4d of the reel hub 4, the sector gear portions 6 of the lock member 2 and the spring 8, and a rotation preventing mechanism for the lock member 2 is comprised of the guide post 1c projected as a part of the upper half 1a and sectored into 3 sections, and the second sectorial slots 8c of the lock member 2.

The operation and function of the above mechanisms will be explained particularly with reference to Fig. 3A and Fig. 3B.

Unless the cassette 10 is loaded to an appropriate apparatus, the lock member 2 and the reel hub 4 are biased downward together by the spring 8 with sector gears 6 being meshed with the circular serration 4d causing the reel hub 4 urged against the lower half 1b as shown in Fig. 3A. As explained before, the lock member 2 is prevented from rotation as its second sectorial slots 8c being engaged with the 3 sectored portions of the guide post 1c which is an integrally molded part of the upper half 1a so that the reel hub 4 is not allowed to rotate when the tape cassette is handled or transported. Therefore, the magnetic tape T wound around the reel hub 4 is prevented from being loosened or tangled in the cassette 10.

As shown in Fig. 3B, upon loading the tape cassette 10 into the appropriate apparatus, the reel hub 4 is pushed upward by the reel disc 7 as it enters into the engage socket 4c making the reel hub 4 supported by the reel disc 7 but floated from the tape cassette 10. But, before the reel disc 7 making the complete engagement with the reel hub 4, a pivot 7a provided at the center of the reel disc 7 contacts and pushes the lock member 2 at the center post 5 up to the ceiling of the upper half 1a by overcoming the biasing pressure of the spring 8. The pivot 7a also serves as a hearing when the reel disc 7 revolves.

This causes the sector gear portions 6 disengaging from the circular serration 4d allowing the reel hub 4 freely rotatable within the tape cassette 10 with the reel disc 7.

As clearly understood from the above description, while various operations including forwarding or rewinding of the tape T are performed with the cassette 10 being loaded into the appropriate apparatus, the pivot 7a of the reel disc 7 is always contacting with the bottom surface of the center post 5 under the pressure produced by the spring 8.

According to the present invention, friction between the center post 5 and the reel disc 7 is minimized since the pivot 7a of the reel disc 7 is spherical which contacts the flat bottom of the center post 5 so that an additional burden by the friction, which may otherwise be loaded to the reel disc driving mechanism of the apparatus, is avoided.

In the exemplary embodiment of the invention as disclosed in Fig. 3A and Fig. 3B, the pivot 7a is provided in the side of the reel disc 7, however, as an alternative, a pivot 5a may be provided on the bottom surface of the center post 5 as illustrated in Fig.4B. The three first sectorial slots 2c for preventing rotation of the lock member 2 are provided around the center post 5, and the three sections of the guide posts 1c provided on the ceiling of the upper half 1a, are inserted into the first sectorial slots 2c, however, it is conceivable that any desirable number and configuration of such components as the first sectorial slots may be formed at any position except the dead center of the center post 5. The reel hub 4 disclosed in Fig. 3A and Fig. 3B is not provided with reel flanges, however, they can be adopted if necessary without disturbing the mechanisms of the present invention.

According to the construction and arrangement of the present invention, it does not require a wide space between the reel hub 4 and the upper half 1a of the cassette 10 to accommodate a brake system, so that it can successfully realize a reduced size of the tape cassette without sacrificing a reel brake function. Furthermore, according to the present invention, the arrangement of the pivot and flat contacting surface reduces the friction there between and minimize the otherwise possible burden loaded to the reel disc driving mechanism. It is further understood by those skilled in the art that foregoing description is a preferred embodiment of the disclosed device and that various changes and modifications may be made in the invention without departing from the spirit and scope thereof.

**Claims**

1.  A reel brake system for a tape cassette having an upper half and a lower half forming a case in which at least a reel hub having a rotation center is provided for accommodating a magnetic tape , said tape cassette being loaded to and unloaded from an apparatus for tape recording and reproduction, said reel brake system comprising:

    an engage socket provided at a bottom of said reel hub for engaging with a reel disc of the apparatus;

    a through hole defined at a ceiling of said engage socket;

    first engage means provided on an upper part of said reel hub;

    lock means provided between said upper half and said reel hub, said lock means having slot means provided off said rotation center, and having a second engage means and a center post projecting through said through hole, said lock means movable vertically within the case ;

    restricting means provided on said upper half opposing said slot means for engaging therewith, thereby said lock means is restricted from rotation;

    said lock means being biased toward said reel hub to cause said second engage means to engage with said first engage means when the tape cassette is not loaded into the apparatus so that said reel hub is prevented from rotation, said lock means being pushed toward said upper half at the center post by said reel disc to cause said second engage means to disengage from said first engage means upon loading the tape cassette into the apparatus so that said reel hub is allowed to rotate within said case.

2.  A reel brake system claimed in claim 1, in which said first engage means is provided in a recess defined on the upper part of said reel hub, and said lock means further comprises a lock member and biasing means for biasing said lock member toward said reel hub, said lock member having radially extending arms having said second engage means at respective distal ends thereof.

3.  A reel brake system claimed in claim 2 further comprising circular serration provided in the recess as said first engage means and pivot means provided on one of said center post of the lock means and said reel disc.

# Fig.1

# Fig.2

...

## Fig.3A

## Fig.3B

*Fig.4A*

*Fig.4B*

*Fig.5A*

*Fig.5B*

**European Patent Office**

## EUROPEAN SEARCH REPORT

Application Number

EP 92 30 1618

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 070 616 (TECHNICOLOR INC.) <br> * page 9, line 24 - page 11, line 11; figures 6-11 * | 1-3 | G11B23/087 |
| X | EP-A-0 284 687 (SHAPE INC.) <br> * figures * | 1-3 | |
| X | IBM TECHNICAL DISCLOSURE BULLETIN. <br> vol. 28, no. 10, March 1986, NEW YORK US <br> page 4552; 'Cartridge reel brake' <br> * the whole document * | 1-3 | |
| X <br> A | US-A-3 706 426 (M.E.PRAHL) <br><br> * abstract; figures 2A-3B * <br> * column 5, line 1 - line 16 * | 1 <br> 2,3 | |
| X <br><br><br><br> A | IBM TECHNICAL DISCLOSURE BULLETIN. <br> vol. 13, no. 7, December 1970, NEW YORK US <br> page 1763; <br> M.E.PRAHL: 'Cassette reel lock' <br><br> * the whole document * | 1 <br><br><br><br> 2,3 | **TECHNICAL FIELDS SEARCHED (Int. Cl.5 )** <br><br> G11B |
| A | DE-A-4 023 590 (AUTOMATION FACILITIES LTD.) <br> * abstract; figures * | 1-3 | |
| A | US-A-4 019 695 (J.L.WHARAM) | | |

The present search report has been drawn up for all claims

| Place of search | Date of completion of the search | Examiner |
|---|---|---|
| THE HAGUE | 09 JULY 1992 | DECLAT M.G. |

EPO FORM 1503 03.82 (P0401)